# EUROPÄISCHE PATENTANMELDUNG

(11) **EP 1 647 240 A1**
(43) Veröffentlichungstag der Anmeldung: **19.04.2006**
(21) Anmeldenummer: 05022422.9
(22) Anmeldetag: 14.04.2001
(51) Int. Cl.: A61C 17/22

(54) **Elektromotorisch angetriebene Zahnbürste mit Signalgeber**

(30) Priorität: 31.05.2000 DE 10026859
(62) Teilanmeldung aus: 01931607.4
(71) Anmelder: Braun GmbH, 61476 Kronberg im Taunus (DE)
(72) Erfinder: Trawinski, Peter, 64331 Weiterstadt (DE); Stratmann, Martin, 60318 Frankfurt/M. (DE)
(74) Vertreter: Sievers, Uwe

(57) **Zusammenfassung**

Es wird eine Zahnbürste (10) mit einem Bürstenkopf (12) und einem Gehäuse (14) beschrieben, wobei in dem Gehäuse (14) ein Elektromotor (16) zum Antrieb des Bürstenkopfes (12) und ein Akkumulator (18) zur Energieversorgung des Elektromotors (16) angeordnet sind. Weiterhin ist eine Signalfunktion (20) vorgesehen. Die Zahnbürste ist mit einem an das Netz (24) anschließbaren Ladeteil (22) zur Aufladung des Akkumulators (18) koppelbar. Ein Koppeln und/oder Entkoppeln von Ladeteil (22) und Gehäuse (14) wird von einer Sensorfunktion (26) detektiert, wobei die Sensorfunktion (26) bei detektierter Kopplung und/oder Entkopplung die Signalfunktion (20) aktiviert.

## Beschreibung

Die Erfindung betrifft eine Zahnbürste mit einem Bürstenkopf und einem Gehäuse, in dem ein Elektromotor zum Antrieb des Bürstenkopfes und ein Akkumulator zur Energieversorgung des Elektromotors angeordnet sind in Kombination mit einem an das Netz anschließbaren Ladeteil zur Aufladung des Akkumulators, wobei das Gehäuse mit dem Ladeteil zur Aufladung des Akkumulators bzw. zur Benutzung der Zahnbürste koppelbar bzw. entkoppelbar ist, ein Koppeln und/oder Entkoppeln von Ladeteil und Gehäuse von einer Sensorfunktion detektiert wird.

Derartige Zahnbürsten sind allgemein bekannt und haben sich auch in der Praxis recht gut bewährt. Einige dieser Zahnbürsten sind auch mit einem Zeitgeber ausgestattet, der dem Benutzer bei dem Gebrauch der Zahnbürste signalisiert, wann beispielsweise eine vorbestimmte oder empfohlene Putzzeitdauer abgelaufen ist. In der Regel werden für die Putzzeitdauer ca. 2 Minuten vorgesehen, die unter Umständen auch in kleinere Intervalle unterteilt werden können, so daß dem Benutzer auch signalisiert werden kann, wie lange beispielsweise die untere und obere Zahnreihe zu reinigen sind. Nach Ablauf dieser einen oder der mehreren Putzzeitdauern wird von der Zahnbürste ein optisches oder akustisches Signal generiert und dem Benutzer angezeigt bzw. mitgeteilt, daß das Ende eines Putzzeitintervalls bzw. der Putzzeitdauer erreicht ist. Gewöhnlich werden diese mit einem Akkumulator ausgestatteten elektromotorisch angetriebenen Zahnbürsten nach der Benutzung auf einem Ladeteil oder einer Ladestation abgestellt, so daß der Akkumulator wieder aufgeladen werden kann. Bei der nächsten Benutzung wird die Zahnbürste von der Ladestation bzw. dem Ladeteil abgenommen und mittels eines Ein-/Aus-Schalters in Betrieb gesetzt. Gelegentlich besteht jedoch das Problem, daß einigen Benutzern der elektromotorisch angetriebenen Zahnbürste das Vorhandensein eines Zeitgebers nicht bewußt ist, da beispielsweise die Bedienungsanleitung nicht sorgfältig gelesen wird oder die Zahnbürste zur Zahnreinigung nur für sehr kurze Putzzeitintervalle eingeschaltet wird, so daß das Ende des vom Zeitgeber vorgegebenen Putzzeitintervall nicht erreicht wird und somit auch vom Signalgeber bzw. der Signalfunktion ein Signal nicht abgegeben wird. In einem solchen Fall ist der Zeitgeber praktisch wirkungslos, wobei der Benutzer keine Informationen darüber erhält, daß die Dauer der individuellen Zahnreinigung nicht ausreichend und damit auch die Zahnreinigung selbst ungenügend ist. Des weiteren kann es gelegentlich vorkommen, daß die Signalfunktion oder auch der Zeitgeber ausfällt, obwohl die elektromotorisch angetriebene Zahnbürste ansonsten ordnungsgemäß funktioniert. Auch in diesem Ausnahmefall erhält der Benutzer keine Information über die empfohlene Putzzeitdauer. Allerdings ist es für den Benutzer auch relativ umständlich, zu überprüfen, ob die Signalgeber- bzw. Zeitgeberfunktion auch betriebsbereit ist. Schließlich besteht ein allgemeines Problem vor allem bei Kindern darin, eine Motivation für die Zahnreinigung zu bewirken.

Aus der DE 40 36 479 A1 ist bereits eine Zahnbürste mit den eingangs genannten Merkmalen bekannt. Mittels der Sensorfunktion, welche ein Koppeln und/oder Entkoppeln von Ladeteil und Gehäuse der Zahnbürste detektiert, wird der Ein-/Ausschalter der Zahnbürste in die Ausstellung überführt, so daß sichergestellt ist, daß der elektrische Verbraucher der Zahnbürste während des Ladevorganges der Akkumulatoren ausgeschaltet ist.

Die DE 198 11 676 A1 offenbart eine Zahnbürste, die eine Einrichtung zum Erzeugen von Signalen mittels einer Batterie aufweist.

Aus der DE 40 02 647 A1 ist eine elektronische Zahnbürste mit einem Griffstück bekannt, welches eine Leuchtdiode oder eine Einrichtung zur Erzeugung akustischer Signale sowie eine elektrische Schaltung zur Aktivierung aufweist. Wenn die Bürste erfaßt und mit den Zähnen in Berührung gebracht wird, wird ein für den Benutzer wahrnehmbares Signal abgegeben.

Aus der DE 297 09 865 U1 ist eine Zahnbürste mit einer Signaleinrichtung zur Abgabe eines akustischen Signals bekannt.

Schließlich zeigt die US 5,184,959 A eine Konsole zur Aufnahme von Handzahnbürsten, wobei den einzelnen, unterschiedlich im Griffbereich ausgebildeten Handzahnbürsten individuelle Aufnahmen in der Konsole zugeordnet sind und beispielsweise eine Timerfunktion bei Entnahme der Handzahnbürste der Konsole in Gang gesetzt werden kann.

Demgegenüber liegt der vorliegenden Erfindung die Aufgabe zugrunde, eine elektromotorisch angetriebene Zahnbürste mit den eingangs genannten Merkmalen dahingehend weiterzubilden, daß das Vorhandensein einer betriebsbereiten Zeitgeberfunktion und/oder Signalfunktion zur Abgabe von für den Benutzer wahrnehmbaren Signalen ohne weiteres erkannt werden kann. Auch soll die Bereitschaft zur Zahnreinigung bzw. die Benutzung der Zahnbürste gefördert werden.

Nach der Erfindung wird diese Aufgabe bei der Zahnbürste mit den eingangs genannten Merkmalen im wesentlichen dadurch gelöst, daß die Zahnbürste gegebenenfalls eine Zeitgeberfunktion für eine empfohlene Putzzeitdauer sowie eine gegebenenfalls von der Zeitgeberfunktion angesteuerte Signalfunktion zur Abgabe eines für den Benutzer wahrnehmbaren Signals aufweist und die Signalfunktion beim Koppeln und/oder Entkoppeln mittels der Sensorfunktion aktiviert wird.

Durch diese Maßnahme wird dafür gesorgt, daß beim Abnehmen der Zahnbürste vom Ladeteil vor der Benutzung oder beim Aufsetzen der Zahnbürste auf das Ladeteil nach der Benutzung von der Signalfunktion der Zahnbürste ein Signal abgegeben wird. Somit erhält auch ein Benutzer, der beispielsweise die Bedienungsanleitung nicht gelesen hat und dazu tendiert, die Zähne während einer nur sehr kurzen Zeitdauer zu reinigen, beim Abnehmen der Zahnbürste vom und/oder Aufsetzen der Zahnbürste auf das Ladeteil eine akustische oder optische Information, aus der beispielsweise auf das Vorhandensein einer Zeitgeberfunktion bzw. auf die Betriebsbereitschaft der Zeitgeberfunktion geschlossen werden kann. Gerade für Kinder erweist sich die Aktivierung der Signalfunktion beim Koppeln bzw. Entkoppeln der Zahnbürste vom Ladeteil als motivierend, da in gewisser Weise der Spieltrieb der Kinder angeregt werden kann. Insbesondere für eine Kinderzahnbürste erweist es sich auch als sinnvoll, die empfohlene Putzzeitdauer von ca. 2 Minuten in zwei oder mehrere Putzzeitintervalle zu unterteilen, so daß die Signalfunktion nicht nur beim Entkoppeln und/oder Koppeln der Zahnbürste mit dem Ladeteil und zum Ende der empfohlenen Putzzeitdauer aktiviert wird, sondern auch während des empfohlenen Putzzeitintervalls ein oder mehrere Signale durch die Signalfunktion abgegeben werden. Es versteht sich, daß die Zeitgeberfunktion nicht zwingender, sondern nur bevorzugter Bestandteil der Zahnbürste ist. Gelegentlich kann das Vorhandensein der Signalfunktion zur Abgabe wahrnehmbarer Signale an sich ausreichend sein, so daß lediglich beim Koppeln und/oder Entkoppeln wahrnehmbare Signale von der Zahnbürste aufgrund der Aktivierung der Signalfunktion abgegeben werden, da eine Zeitgeberfunktion zur Anzeige einer empfohlenen Putzdauer nicht vorgesehen ist.

Nach einer ersten vorteilhaften Ausgestaltung der Erfindung ist die Sensorfunktion in dem Gehäuse aufgenommen, wobei der Sensorfunktion als Eingangsgröße ein Ladestrom oder eine Ladespannung zugeführt wird. Zwar besteht auch die Möglichkeit, über einen mechanischen Kontakt, der zwischen Zahnbürstengehäuse und Ladeteil wirkt und bei einem Koppeln bzw. Entkoppeln von Ladeteil und Zahnbürste betätigt wird, die Sensorfunktion zu realisieren, doch ist die Auswertung der Ladespannung bzw. des Ladestroms oder vergleichbarer elektrischer Signale erheblich kostengünstiger und konstruktiv unaufwendiger zu realisieren. Darüber hinaus ist diese Lösung auch unabhängig von der Art des Aufladesystems, welches über eine elektrische Kontaktierung zwischen Ladeteil und Zahnbürstengehäuse oder aber auch induktiv, d. h. frei von einer direkten elektrischen Kontaktierung ausgeführt sein kann.

Von besonderem Vorteil ist die Sensorfunktion auf eine zeitliche Änderung von Ladestrom bzw. Ladespannung während des Koppelns und/oder Entkoppelns von Ladeteil und Gehäuse empfindlich. Beim Abnehmen des Gehäuses von dem Ladeteil sinken der Ladestrom bzw. die Ladespannung kurzzeitig bzw. abrupt ab, während bei einem Aufsetzen des Gehäuses auf das Ladeteil diese Größen sprungartig ansteigen. Diese zeitlich rasche Änderung der elektrischen Größen wird von der Sensorfunktion ausgewertet und für eine Ansteuerung der Signalfunktion benutzt. Zeitlich langsamer variierende Änderungen von Ladestrom und Ladespannung werden ausgefiltert bzw. von der Sensorfunktion nicht erfaßt.

Nach einer anderen vorteilhaften Weiterbildung der Erfindung erfolgt die Übertragung der elektrischen Energie vom Ladeteil zum Gehäuse bzw. dem Akkumulator induktiv, wobei die Detektorfunktion einer Empfängerspule im Gehäuse nachgeschaltet ist. Während im Ladeteil selbst eine Sendespule als Primärspule angeordnet ist, die beispielsweise mit einem Wechselstrom von 20 kHz beaufschlagt wird, ist im Gehäuse die Empfängerspule als Sekundärspule angeordnet, welche die von der Sendespule abgestrahlte elektrische Energie aufnimmt und beispielsweise über eine Ladekontrollfunktion dem Akkumulator zuführt. Zum einen kann aufgrund dieser kontaktfreien Ausführung das Gehäuse der Zahnbürste wasserdicht ausgeführt werden, zum anderen lassen sich von den an der Empfängerspule bzw. der Ladekontrollfunktion anliegenden elektrischen Signalgrößen sichere Rückschlüsse darauf ziehen, ob die Zahnbürste mit dem Ladeteil gekoppelt ist oder nicht. Eine Änderung dieser elektrischen Signalgrößen in zeitlicher Hinsicht wird von der Detektorfunktion ausgewertet und zur Ansteuerung der Signalfunktion benutzt.

Von besonderem Vorteil sind nach einer anderen Ausführungsform der Erfindung die von der Signalfunktion abgegebenen Signale eine akustische Melodie. Je nach Benutzergruppe, seien es nun Erwachsene oder Kinder, kann die akustische Melodie individuell angepaßt sein. Die Zeitdauer, in der die Melodie erklingt, kann zwischen ca. 1 Sekunde und ca. 10 Sekunden betragen.

Um die Signalfunktion attraktiver zu machen, kann in dem Gehäuse eine Speicherfunktion zur Speicherung mehrerer unterschiedlicher Signale bzw. Signalfolgen, insbesondere unterschiedlicher Melodien, angeordnet sein. So besteht beispielsweise die Möglichkeit, vier, acht oder auch sechzehn unterschiedliche Signale, Signalfolgen oder Melodien abzuspeichern, so daß die nacheinander abgegebenen Signale, Signalfolgen oder Melodien unterschiedlich sind.

Nach einer anderen äußerst vorteilhaften Weiterbildung der Erfindung ist der Speicherfunktion ein Zufallsgenerator zugeordnet, mit welchem eine der mehreren Signal, Signalfolgen oder Melodien ausgewählt und bei detektierter Kopplung und/oder Entkopplung oder nach Ablauf eines durch einen Zeitgeber definierten Putzzeitintervalls angezeigt bzw. abgespielt werden. Auch durch diese Maßnahme, wonach die Signalfunktion Signale in zufälliger Aufeinanderfolge abgibt; wird die Attraktivität der Zahnbürste insbesondere für Kinder erhöht.

Der Signalfunktion ist von Vorteil ein optischer oder akustischer Signalgeber nachgeschaltet, der die von der Signalfunktion erzeugten Signale, Signalfolgen oder Melodien für den Benutzer wahrnehmbar macht. Als optischer Signalgeber können beispielsweise ein oder mehrere Leuchtdioden vorgesehen sein, die einzeln oder in einer gewissen Zeitabfolge angesteuert werden. Als akustischer Signalgeber kann beispielsweise ein Lautsprecher, ein Piezokristall oder auch der Elektromotor selbst dienen, der von einer Treiberstufe entsprechend den Signalen der Signalfunktion kurzzeitig an- und ausgeschaltet wird.

Von ganz besonderem Vorteil ist der Signalfunktion der Elektromotor als Signalgebers nachgeschaltet, wobei der Elektromotor im Stillstand als Lautsprecher betrieben wird und von der Signalfunktion generierte Melodien wiedergibt. Im Hinblick auf diese Ausgestaltung wird auf die deutsche Patentanmeldung 199 38 670.6 verwiesen, die durch ausdrücklichen Rückbezug in den Offenbarungsgehalt der vorliegenden Anmeldung aufgenommen wird.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein Ausführungsbeispiel einer elektromotorisch angetriebenen Zahnbürste in Kombination mit einem Ladeteil und
- Fig. 2: ein Ausführungsbeispiel einer erfindungsgemäßen Zahnbürste mit Ladeteil im Blockschaltbild.

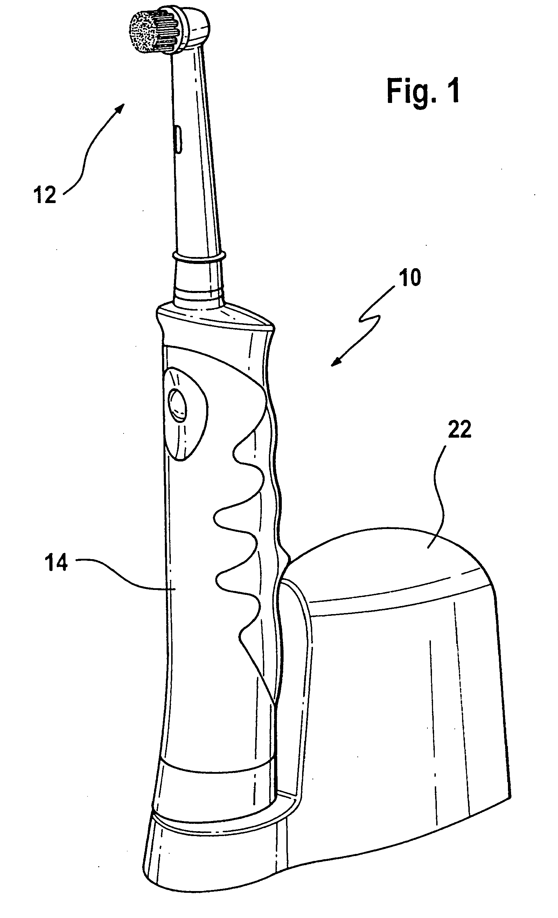

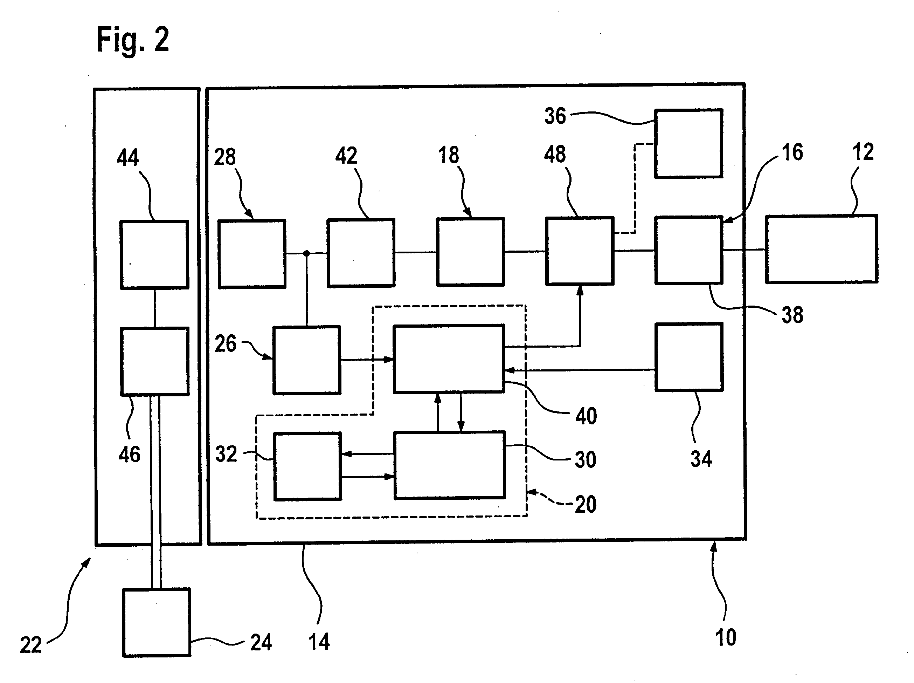

In Fig. 1 ist ein Ausführungsbeispiel einer erfindungsgemäßen Zahnbürste 10 mit einem Bürstenkopf 12 und einem Gehäuse 14 dargestellt. In dem Gehäuse 14 sind gemäß Fig. 2 ein Elektromotor 16 zum Antrieb des Bürstenkopfes 12 und ein Akkumulator 18 zur Energieversorgung des Elektromotors 16 aufgenommen. Die Zahnbürste 10 weist weiterhin eine Signalfunktion 20 sowie einen Zeitgeber 34 auf. Die Signalfunktion 20 steuert über eine Treiberstufe 48 einen Signalgeber 36 bzw. einen Lautsprecher 38 an. Der Signalgeber 36 kann beispielsweise als Leuchtdiode, Piezokristall oder dergleichen ausgebildet sein. Von besonderem Vorteil ist jedoch nur der Lautsprecher 38 vorgesehen, der durch den Elektromotor 16 selbst gebildet wird, wobei dieser während Stillstandsphasen als Lautsprecher betrieben wird. Insoweit wird auf die anhängige deutsche Patentanmeldung 199 38 670.6 verwiesen, die in den Offenbarungsgehalt der vorliegenden Anmeldung mit aufgenommen wird.

Die Zahnbürste 10 ist mit einem Ladeteil 22 koppelbar, welches an das Netz 24 angeschlossen wird. Das Ladeteil 22 weist im vorliegenden Ausführungsbeispiel eine an das Netz 24 anschließbare Ladesteuerungsstufe 46 sowie eine angeschlossene Sendespule 44 auf. Ist die Zahnbürste 10 auf das Ladeteil 22 aufgesteckt oder aufgesetzt, wird die Sendespule 44 des Ladeteils 22 mit einer im Gehäuse 14 angeordneten Empfängerspule 28 induktiv gekoppelt, so daß von der Sendespule 44 berührungslos elektrische Energie auf die Empfängerspule 28 übertragen werden kann. An die Empfängerspule 28 schließt sich eine Ladekontrollfunktion 42 an, der der Akkumulator 18, die Treiberstufe 48 und der Elektromotor 16 nachgeschaltet ist. Die Ausgangssignale der Empfängerspule 28 oder auch Signale der Ladekontrollfunktion 42 werden einer Sensorfunktion 26 zugeführt. Diese Sensorfunktion 26 ist ihrerseits mit der Signalfunktion 20 verbunden.

Die Signalfunktion 20 weist eine Speicherfunktion 30, einen Zufallsgenerator 32 und einen Generator 40, insbesondere Melodiengenerator auf, wobei der Generator 40 mit der Treiberstufe 48 verbunden ist.

Ein Koppeln und/oder Entkoppeln von Ladeteil 22 und Gehäuse 14 wird von der Sensorfunktion 26 detektiert, wobei die Sensorfunktion 26 bei detektierter Kopplung und/oder Entkopplung die Signalfunktion 20 aktiviert. Der in dem Gehäuse 14 aufgenommenen Sensorfunktion 26 wird als Eingangsgröße ein elektrisches Signal zugeführt, welches ein Maß für den Ladestrom bzw. die Ladespannung ist. Die Sensorfunktion 26 ist auf die zeitliche Änderung dieser elektrischen Größe während des Koppeln und/oder Entkoppelns von Ladeteil 22 und Gehäuse 14 empfindlich.

Bevorzugt sind die von der Signalfunktion 20 erzeugten und von dem Signalgeber 36 bzw. Lautsprecher 38 bzw. Elektromotor 16 abgegebenen Signale eine oder mehrere akustische Melodien. Hierzu ist die Speicherfunktion 30 vorgesehen, in der mehrere unterschiedliche akustische Signalfolgen gespeichert sind. Über den Zufallsgenerator 32 wird zufällig eine der mehreren Signalfolgen ausgewählt, wobei diese Signalfolge oder Melodie dann als nächstes Signal von der Zahnbürste 10 abgegeben wird. Der Generator 40 sorgt dafür, daß die bevorzugt digital abgespeicherten Signale bzw. Signalfolgen in dem richtigen Zeitablauf dem Signalgeber 36, Lautsprecher 38 bzw. Elektromotor 16 zugeführt werden.

Die Signalfunktion 20 wird beispielsweise dann aktiviert, wenn die Zahnbürste 10 von dem Ladeteil 22 abgenommen wird. In diesem Fall detektiert die Sensorfunktion 26 eine abrupte Änderung der elektrischen Größen der Empfängerspule 28 bzw. der Ladekontrollfunktion 42 und aktiviert demgemäß die Signalfunktion 20, so daß die Zahnbürste 10 beispielsweise eine kurze Melodie ertönen läßt. Beim Einschalten der Zahnbürste 10 zum Reinigen der Zähne wird des weiteren der Zeitgeber 34 aktiviert, der nach Ablauf eines Zeitintervalls von beispielsweise ca. 2 Minuten oder beispielsweise 1 Minute oder gegebenenfalls 30 Sekunden erneut die Signalfunktion aktiviert, worauf eine weitere, durch die Zufallsgeneratorfunktion 32 ausgewählte Melodie erklingt, so daß der Benutzer über den Ablauf eines Zeitputzintervalls bzw. Zeitputz-Teilintervalls informiert ist. Nach Beendigung des Putzvorganges wird die Zahnbürste ausgeschaltet und wieder auf das Ladeteil 22 gesetzt oder gesteckt, wobei dann gegebenenfalls über die Sensorfunktion 26 erneut die Signalfunktion 20 aktiviert werden kann und von der Zahnbürste eine weitere Signalfolge oder dergleichen Melodie abgegeben wird. Im allgemeinen dürfte es jedoch ausreichend sein, daß die Zahnbürste 10 lediglich beim Abnehmen von dem Ladeteil 22 eine kurze Melodie ertönen läßt.

## Patentansprüche

1. Zahnbürste (10) mit einem Bürstenkopf (12) und einem Gehäuse (14), in dem ein Elek tromotor (16) zum Antrieb des Bürstenkopfes (12) und ein Akkumulator (18) zur Energieversorgung des Elektromotors angeordnet sind in Kombination mit einem an das Netz (24) anschließbaren Ladeteil (22) zur Aufladung des Akkumulators, wobei das Gehäuse (14) mit dem Ladeteil (22) zur Aufladung des Akkumulators (18) bzw. zur Benutzung der Zahnbürste (10) koppelbar bzw. entkoppelbar ist sowie ein Koppeln und/oder Entkoppeln von Ladeteil (22) und Gehäuse (14) von einer Sensorfunktion (26) detektiert wird, **dadurch gekennzeichnet, daß** die Zahnbürste (10) bevorzugt eine Zeitgeberfunktion (34) für eine empfohlene Putzzeitdauer sowie eine bevorzugt von der Zeitgeberfunktion (34) angesteuerte Signalfunktion (20) zur Abgabe eines für den Benutzer wahrnehmbaren Signals aufweist und die Signalfunktion (20) beim Koppeln und/oder Entkoppeln mittels der Sensorfunktion (26) aktiviert wird.

2. Zahnbürste nach Anspruch 1, **dadurch gekennzeichnet, daß** die Sensorfunktion (26) in dem Gehäuse (14) aufgenommen ist und als Eingangsgröße elektrische Signale, beispielsweise einen Ladestrom oder eine Ladespannung zugeführt bekommt.

3. Zahnbürste nach Anspruch 1 oder 2, **dadurch gekennzeichnet, daß** die Sensorfunktion (26) auf eine zeitliche Änderung der elektrischen Größen, beispielsweise Ladestrom bzw. Ladespannung, während des Koppelns und/oder Entkoppelns von Ladeteil (22) und Gehäuse (14) empfindlich ist.

4. Zahnbürste nach einem der vorhergehenden Ansprüche, **dadurch gekennzeichnet, daß** die Übertragung der elektrischen Energie von Ladeteil (22) zum Gehäuse (14) induktiv erfolgt und die Sensorfunktion (26) einer Empfängerspule (28) im Gehäuse (14) nachgeschaltet ist.

5. Zahnbürste nach einem der vorhergehenden Ansprüche, **dadurch gekennzeichnet, daß** das Signal eine akustische Melodie ist.

6. Zahnbürste nach einem der vorhergehenden Ansprüche, **dadurch gekennzeichnet, daß** in dem Gehäuse (14) eine Speicherfunktion (30) zur Speicherung mehrerer unterschiedlicher Signale bzw. Signalfolgen, insbesondere unterschiedliche akustische Melodien, angeordnet ist.

7. Zahnbürste nach Anspruch 6, **dadurch gekennzeichnet, daß** der Speicherfunktion (30) eine Zufallsgeneratorfunktion (32) zugeordnet ist, mit welcher eine der mehreren Signale, Signalfolgen oder Melodien ausgewählt und bei detektierter Kopplung und/oder Entkopplung oder nach Ablauf eines durch eine Zeitgeberfunktion (34) definiertes PutzzeitIntervall angezeigt bzw. abgespielt werden.

8. Zahnbürste nach einem der vorhergehenden Ansprüche, **dadurch gekennzeichnet, daß** der Signalfunktion (20) ein optischer oder akustischer Signalgeber (36) nachgeschaltet ist.

9. Zahnbürste nach einem der vorhergehenden Ansprüche 1 bis 7, **dadurch gekennzeichnet, daß** der Signalfunktion (20) der Elektromotor (16) als Signalgeber nachgeschaltet ist, wobei der Elektromotor (16) im Stillstand als Lautsprecher (38) betrieben wird.
